# EUROPEAN PATENT APPLICATION

(11) **EP 4 775 857 A1**
(43) Date of publication of application: **15.07.2026**
(21) Application number: 24862062.7
(22) Date of filing: 06.09.2024
(51) Int. Cl.: F16K 11/085, F16K 27/06, F16K 31/53, F16K 31/04

(54) **VALVE DEVICE**

(30) Priority: 07.09.2023 CN 202311153121
(71) Applicant: Zhejiang Sanhua Automotive Components Co., Ltd., Hangzhou, Zhejiang 310018 (CN)
(72) Inventor: WANG, Lixin, Hangzhou, Zhejiang 310018 (CN); WANG, Yun, Hangzhou, Zhejiang 310018 (CN); LIN, Long, Hangzhou, Zhejiang 310018 (CN); LIN, Jialun, Hangzhou, Zhejiang 310018 (CN)
(74) Representative: Maikowski & Ninnemann Patentanwälte Partnerschaft mbB
(86) International application number: PCT/CN2024/117342
(87) International publication number: WO 2025/051224

(57) **Abstract**

A valve device. The valve device comprises a connecting body, a valve core, and a sealing member. The connecting body has an accommodating cavity and a communicating port; the sealing member is provided with a channel correspondingly communicated with the communicating port; and the valve core is at least partially located in the accommodating cavity. The sealing member comprises an elastic part, the elastic part is circumferentially arranged along the channel, and the elastic part is compressed by the connecting body and the valve core; the sealing member is provided with a sealing groove, the sealing groove is circumferentially arranged along the channel, and the connecting body fits against the elastic part to seal the sealing groove; the elastic part is compressed to deform, the sealing groove circumferentially arranged along the channel undergoes exhaust to form negative pressure, and then the elastic part fits more tightly against the connecting body, improving the sealing performance.

## Description

The present application claims the priority to Chinese Patent Application No. 2023111531215, titled "VALVE DEVICE", filed with the China National Intellectual Property Administration on September 7, 2023, which is incorporated herein by reference in its entirety.

### FIELD

The present application relates to the technical field of fluid control, and in particular to a valve device.

### BACKGROUND

A valve device includes a connecting member, a valve core, and a sealing member. The sealing member has a channel communicated with a communication port of the connecting member. The sealing member is disposed between the connecting member and the valve core. How to design the valve device to improve the sealing performance of the valve device is an issue to be addressed.

### SUMMARY

An object of the present application is to provide a valve device to improve the sealing performance of the valve device.

According to one of embodiments of the present application, a valve device is provided, which includes a connecting member, a valve core, and a sealing member. The connecting member is provided with an accommodation chamber and a communication port. The sealing member is provided with a channel correspondingly communicated with the communication port. At least a part of the valve core is located in the accommodation chamber. The sealing member includes an elastic part arranged along a periphery of the channel. The elastic part is compressed by the connecting member and the valve core. The sealing member is provided with a sealing groove arranged along the periphery of the channel. The connecting member is in close contact with the elastic part to seal the sealing groove.

The valve device according to the one of the embodiments of the present application includes the sealing member. The sealing member includes the elastic part arranged along the periphery of the channel. The sealing groove is formed in the elastic part. The elastic part of the sealing member is compressed by the connecting member and the valve core. The elastic part is deformed under compression, causing air to be discharged from the sealing groove arranged along the periphery of the channel, thus creating a negative pressure in the sealing groove. Therefore, the elastic part comes into closer contact with the connecting member, thereby improving the sealing performance.

### BRIEF DESCRIPTION OF THE DRAWINGS

FIG. 1 is a schematic view showing an overall internal structure of a valve device according to an embodiment of the present application;
FIG. 2 is a schematic view showing the structure of each component of the valve device according to an embodiment of the present application;
FIG. 3 is a schematic view showing the structure of the valve device according to an embodiment of the present application at one of channels;
FIG. 4 is a schematic enlarged view of a part S in FIG. 3;
FIG. 5 is a schematic view showing the structure of a valve device according to another embodiment of the present application at one of channels;
FIG. 6 is a schematic enlarged view of a part N in FIG. 5;
FIG. 7 is a schematic view showing the structure of an elastic part of a sealing member of a valve device according to an embodiment of the present application;
FIG. 8 is a schematic view showing the structure of an elastic part of a sealing member of a valve device according to another embodiment of the present application;
FIG. 9 is a schematic sectional view taken along a line M-M in FIG. 5;
FIG. 10 is a schematic view showing angles of a first elastic portion and a second elastic portion according to an embodiment of the present application;
FIG. 11 is a schematic view showing the structure of an elastic part of a valve device according to another embodiment of the present application;
FIG. 12 is a schematic view showing the structure of a sealing member of a valve device according to an embodiment of the present application from another perspective;
FIG. 13 is a schematic view showing the structure of a sealing member and a connecting member of a valve device according to an embodiment of the present application;
FIG. 14 is a schematic view showing the structure of a position-limiting part and a support part of a valve device according to an embodiment of the present application; and
FIG. 15 is a schematic view showing the structure of a support body according to another embodiment of the present application.

### Reference numerals:

| | | | |
|---|---|---|---|
| 1. | connecting member; | 2. | valve core; |
| 3. | sealing member; | 11. | cover; |
| 12. | lateral wall part; | 13. | position-limiting rib; |
| 31. | elastic part; | 311. | first elastic portion; |
| 312. | second elastic portion; | 3111. | first surface; |
| 3112. | second surface; | 3121. | third surface; |
| 3122. | fourth surface; | 311a. | first abutment portion; |
| 311b. | first connecting portion; | 312a. | second abutment portion; |
| 312b. | second connecting portion; | 32. | base; |
| 33. | circumferential wall part; | 34. | position-limiting part; |
| 35. | support part; | 351. | support body; |
| 21. | upper partition; | 22. | lower partition; |
| 23. | vertical partition; | 24. | middle partition; |
| A. | accommodation chamber; | B. | communication port; |
| C. | channel; | D. | sealing groove; |
| C1. | first channel; | C2. | second channel; |
| a. | first included angle; | b. | second included angle. |

### DETAILED DESCRIPTION OF THE EMBODIMENTS

Features and exemplary embodiments in various aspects of the present application will be described below. In order to more clearly illustrate objects, technical solutions, and advantages of the present application, the present application will be further described below with reference to the accompanying drawings and specific embodiments. The relational terms such as "first" and "second" herein are only used to distinguish one component from another with the same name, rather than necessitating or implying that an actual relationship or order exists among the components.

A valve device is provided according to an embodiment of the present application. The valve device can be applied in an air conditioning system or a thermal management system of a vehicle, and particularly in a coolant circulation loop of a vehicle. Specifically, the valve device may be configured to block and allow a flow path of the coolant circulation loop and/or adjust a flow rate of a refrigerant.

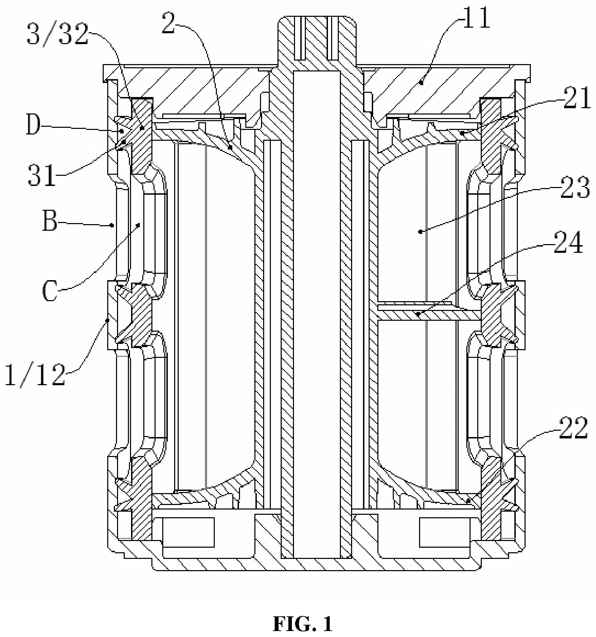

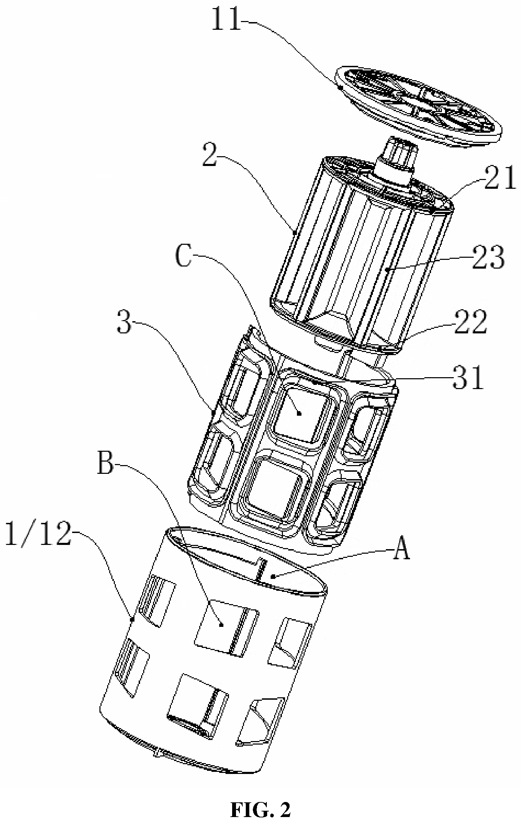

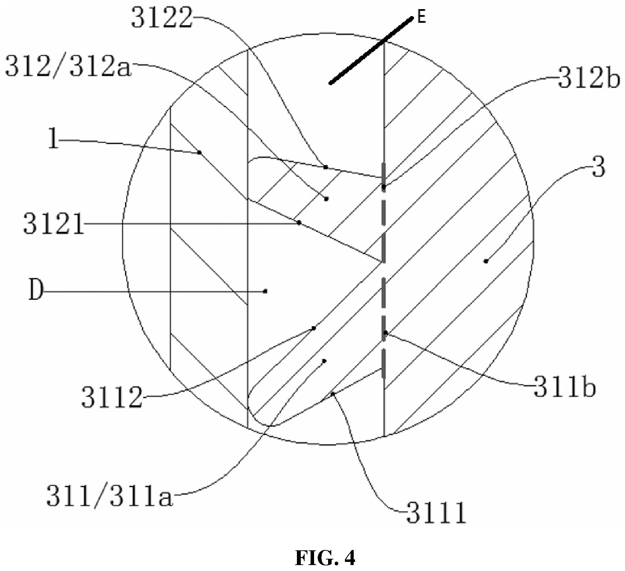

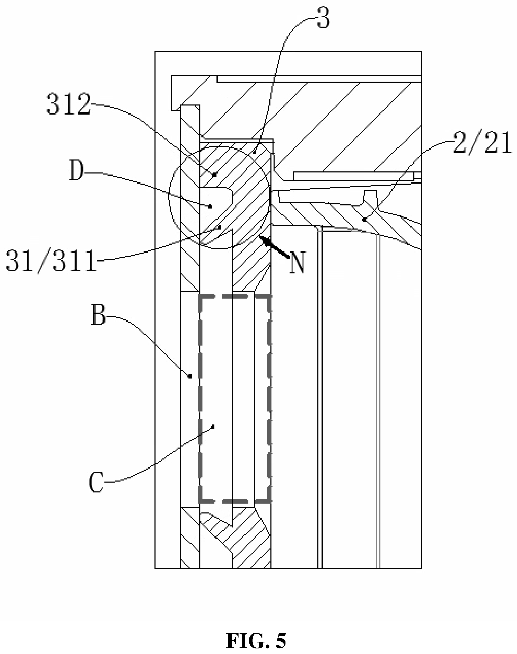

Specifically, as shown in FIGS. 1 to 8, a valve device according to an embodiment of the present application includes a connecting member 1, a valve core 2, and a sealing member 3. The connecting member 1 is provided with an accommodation chamber A and a communication port B. The sealing member 3 is provided with a channel C correspondingly communicated with the communication port B. At least a part of the valve core 2 is located in the accommodation chamber A. At least a part of the sealing member 3 is tightly pressed between the connecting member 1 and the valve core 2. The connecting member may be a valve body or a flow channel plate. The connecting member includes a lateral wall part 12, a bottom wall part, and a cover 11. The accommodation chamber A is defined by the lateral wall part 12, the bottom wall part, and the cover 11. The cover 11 is in fixed or position-limited connection to the lateral wall part 12. The specific connection means includes screwing, welding, and snap-fit. The communication port B is located at the lateral wall part 12 or the bottom wall part. At least a part of the sealing member 3 is tightly pressed between the valve core 2 and the bottom wall part of the connecting member 1 or between the valve core 2 and the lateral wall part 12 of the connecting member 1. The sealing member 3 includes an elastic part 31, which is arranged along a periphery of the channel C. This may be implemented as follows: the elastic part 31 is arranged along the entire periphery of the channel C. The elastic part 31 is compressed by the connecting member 1 and the valve core 2. This is not limited to a case where the connecting member 1 and the valve core 2 directly contact and compress the elastic part 31. Alternatively, the connecting member 1 and the valve core 2 may be provided with an additional component to compress the elastic part 31. The sealing member 3 is provided with a sealing groove D, and the sealing groove D is arranged along the periphery of the channel C. This may be implemented as follows: at least a part of walls of the sealing groove D is located at the elastic part 31, and the connecting member 1 is in close contact with and presses against the walls of the sealing groove D, and the sealing groove D is arranged along the entire periphery of the channel C. The connecting member 1 is in close contact with the elastic part 31 to block the sealing groove D. This may be implemented as follows: the connecting member 1 is in close and direct contact with the elastic part 31. Alternatively, an additional component may be fixedly connected to the connecting member 1, and the connecting member 1 is in close contact with the elastic part 31 via the additional component to seal the sealing groove D. When the sealing member 3 is pressed between the valve core 2 and the connecting member 1, the elastic part 31 is compressed. The elastic part 31 is deformed under compression, causing air to be discharged from the sealing groove D of the elastic part 31, thus creating a negative pressure in the sealing groove D. In this way, the elastic part 31 and the sealing member 3 tightly contact the connecting member 1, and thus the sealing member 3 tightly contacts and seals the valve core 2 and the connecting member 1 at the communication port B and the channel C, thereby improving the sealing performance of the valve.

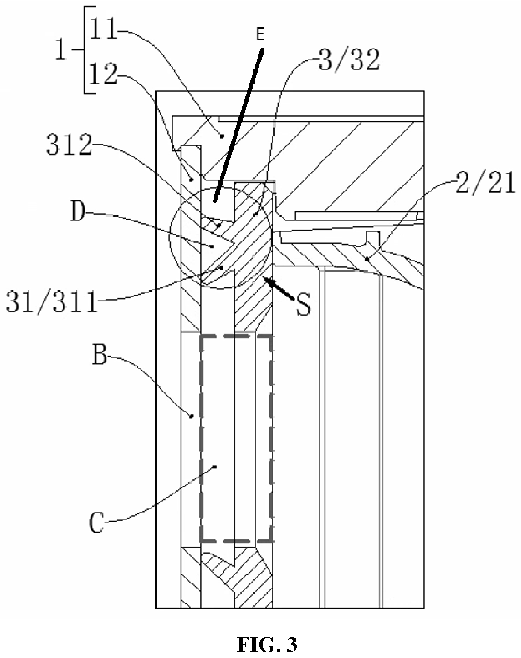

Referring to FIGS. 3, 4, and 7, in this embodiment, the elastic part 31 includes a first elastic portion 311 and a second elastic portion 312. The second elastic portion 312 is arranged farther from a center of the channel C than the first elastic portion 311. The walls of the sealing groove D include the first elastic portion 311 and the second elastic portion 312. The first elastic portion 311 and the second elastic portion 312 are both arranged along the periphery of the channel C. Each of the first elastic portion 311 and the second elastic portion 312 preferably is a closed body, which may have a ring shape, a rectangular shape, or other closed polygonal shapes. A projection of walls of the channel C in a flow direction of the channel C is located within a projection of the first elastic portion 311, which is a closed body, in the flow direction of the channel C. The first elastic portion 311 includes a first surface 3111 and a second surface 3112. Peripheral wall surfaces of the channel C include the first surface 3111. Wall surfaces of the sealing groove D include the second surface 3112 and a third surface 3121. The third surface 3121 is located at the second elastic portion 312. Since the first elastic portion 311 and the second elastic portion 312 are compressed, a negative pressure is generated in the sealing groove D, so that the second surface 3112 and the third surface 3121, as wall surfaces of the sealing groove D, adhere to the connecting member 1. Under the dual effect of pressing forces applied by the first elastic portion 311 and the second elastic portion 312 and adhesive forces of the second surface 3112 and the third surface 3121, the sealing performance of the valve is significantly improved.

The valve device is provided with a cavity E. The cavity E is located between the connecting member 1 and the sealing member 3 in a radial direction of the accommodation chamber A, and is located closer to an end part of the sealing member 3 than the seal groove D in an axial direction of the valve core 2. Walls of the cavity E include an outer peripheral wall of the elastic part 31. The cavity E is in communication with the accommodation chamber A. When a fluid leaks into the accommodation chamber A, the fluid in the accommodation chamber A may come into contact with the outer peripheral wall of the elastic part 31 through the cavity E. For example, in a case where the elastic part 31 includes the second elastic portion 312, the fluid entering the cavity E may contact and apply pressure to an outer surface of the second elastic portion 312, causing the second elastic portion 312 to tilt toward the first elastic portion 311. This increases radial deformation of the elastic part 31, thereby improving the sealing performance of the valve.

Further, references are made to FIGS. 3 to 6. In some embodiments, in order to further improve the sealing performance of the sealing member 3, the sealing member 3 includes a base 32. The elastic part 31 and the base 32 are integrally formed. The elastic part 31 protrudes toward the connecting member 1 relative to the base 32. The first elastic portion 311 and the second elastic portion 312 protrude toward the connecting member 1 from a lateral wall of the base 32. The other lateral wall of the base 32 is in sliding fit with the valve core 2. Specifically, the other lateral wall of the base 32 close to the valve core 2 is configured as a thin film or is coated, and thus is smooth, so as to improve the wear resistance of the sealing member 3 and reduce friction between the base 32 and the valve core 2. The elastic part 31 and a side of the base 32 opposite to the other lateral wall of the base 32 are made of rubber-based materials to increase a friction coefficient between the elastic part 31 and the connecting member 1. The first elastic portion 311 includes a first surface 3111 and a second surface 3112. The second elastic portion 312 includes a third surface 3121 and a fourth surface 3122. The peripheral wall surfaces of the channel C include the first surface 3111. The wall surfaces of the sealing groove D include the second surface 3112 and the third surface 3121. The fourth surface 3122 is located on a side of the second elastic portion 312 away from the first elastic portion 311. When a low-pressure fluid flows through the valve, the sealing of the valve is mainly achieved by the pressing force applied by the first elastic portion 311 and the second elastic portion 312. As shown in FIG. 3, the first elastic portion 311 gradually tapers in a direction away from the valve core 2, while the second elastic portion 312 gradually expands in the direction away from the valve core 2. That is, the first elastic portion 311 and the second elastic portion 312 are inclined in opposite directions relative to the base 32, thereby diverging from each other. When a high-pressure fluid flows through the valve, the high-pressure fluid applies forces to the first surface 3111 of the first elastic portion 311 and the fourth surface 3122 of the second elastic portion 312. Under the forces, the first elastic portion 311 and the second elastic portion 312 approach each other. Accordingly, the first elastic portion 311 and the second elastic portion 312 stand up relative to the base 32, that is, the first elastic portion 311 and the second elastic portion 312 tend to become more perpendicular to the base 32, so that the first elastic member 311 and the second elastic member 312 apply increased pressing forces to the connecting member 1. Therefore, when the high-pressure fluid is circulated, the sealing performance of the valve can be further improved to meet sealing requirements for the high-pressure fluid. In common practice, when a plastic valve body or a plastic flow channel plate is used as the connecting member, the sealing member is tightly pressed such that it meets the sealing requirements for the high-pressure fluid. Consequently, regardless of whether the fluid is a high-pressure fluid or a low-pressure fluid, the plastic valve body or the plastic flow channel plate undergoes deformation due to the compression. Long-term deformation may negatively affect the resilience of the plastic valve body or the plastic flow channel plate, resulting in a decrease in the pressing force in the deformed area, thereby degrading the sealing performance. In this embodiment, only when a high-pressure fluid is circulated, the sealing member 3 applies an increased pressing force to the connecting member 1 to meet the sealing requirements for the high-pressure fluid. When a low-pressure fluid is circulated, the sealing member 3 applies a smaller pressure to the connecting member 1, preventing significant deformation of the plastic valve body or the plastic flow channel plate. Thus, the resilience of the plastic valve body or the plastic flow channel plate is minimally affected, which avoids affecting the sealing performance of the valve, thereby prolonging the service life of the valve.

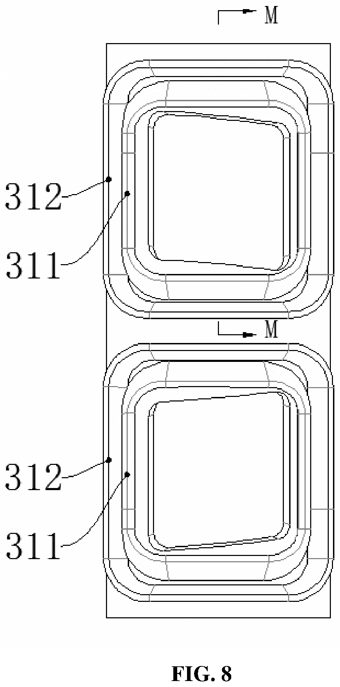

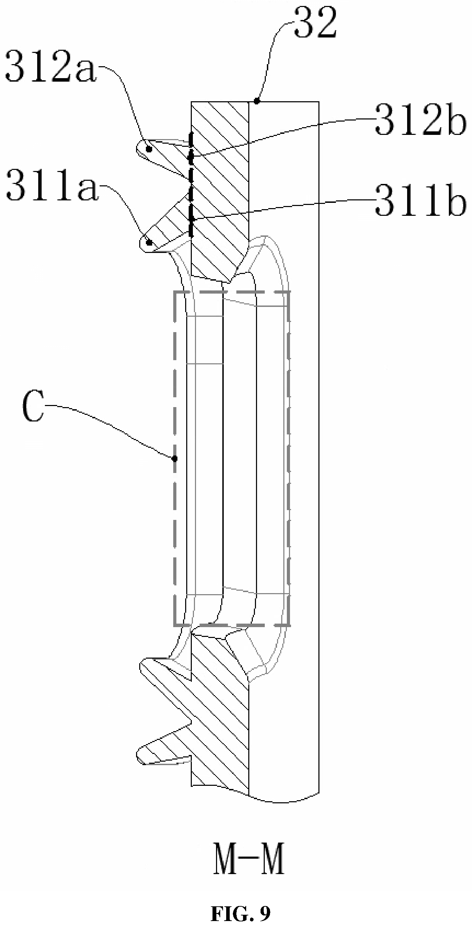

References are made to FIGS. 8 and 9. In order to facilitate air discharge from the sealing groove D of the elastic part 31 of the valve device when the elastic part 31 is tightly pressed during mounting, and to ensure that the elastic part 31 comes into closer contact with the connecting member 1, the first elastic portion 311 includes a first abutment portion 311a and a first connecting portion 311b. The first abutment portion 311a is in close contact with the connecting member 1. The first connecting portion 311b is connected to the base 32 and the first abutment portion 311a. The first abutment portion 311a is located farther from the base 32 than the first connecting portion 311b. The first abutment portion 311a is located closer to the center of the channel C than the first connecting portion 311b. That is, a contour of an orthogonal projection of the first abutment portion 311a in the flow direction of the channel C is closer to the center of the channel C than a contour of an orthogonal projection of the first connecting portion 311b in the flow direction of the channel C. Further, the second elastic portion 312 includes a second abutment portion 312a and a second connecting portion 312b. The second abutment portion 312a is in close contact with the connecting member 1. The second connecting portion 312b is connected to the base 32 and the second abutment portion 312a. The second abutment portion 312a is located farther from the base 32 than the second connecting portion 312b. The second abutment portion 312a is located farther from the center of the channel C than the second connecting portion 312b. That is, a contour of an orthogonal projection of the second abutment portion 312a in the flow direction of the channel C is farther from the center of the channel C than a contour of an orthogonal projection of the second connecting portion 312b in the flow direction of the channel C. In this embodiment, a cross-section of the first elastic portion 311 and the second elastic portion 312 is substantially trumpet-shaped, but is not limited to this shape. Alternatively, one of the first elastic portion 311 and the second elastic portions 312 is perpendicular to the base.

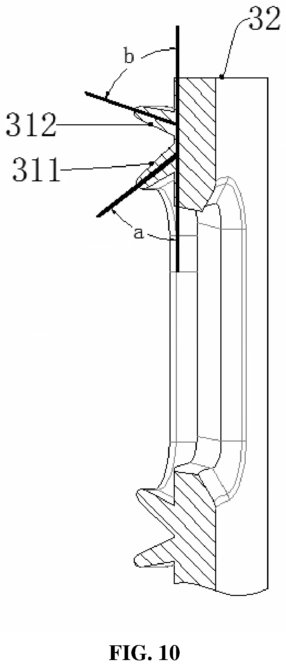

Further, reference is made to FIG. 10. In this embodiment, in order to ensure that the first elastic portion 311 and the second elastic portion 312 are in close contact with the connecting member 1 and can converge toward the sealing groove D when the high-pressure fluid is circulated, inclination angles of the first elastic portion 311 and the second elastic portion 312 are specified. An acute angle between the first elastic portion 311 and the base 32 is referred to as a first included angle a. The first included angle a is greater than 30 degrees and less than 80 degrees. An acute angle between the second elastic portion 312 and the base 32 is referred to as a second included angle b. The second included angle b is greater than 30 degrees and less than 80 degrees. In this embodiment, each of the first included angle a and the second included angle b ranges preferably from 60 degrees to 80 degrees. Alternatively, an included angle between an outer peripheral surface of the base 32 and the first surface 3111 ranges preferably from 68 degrees to 73 degrees, and an included angle between the outer peripheral surface of the base 32 and the fourth surface 3122 ranges preferably from 68 degrees to 73 degrees.

This embodiment primarily describes the sealing design for a lateral wall of a column valve. Referring to FIGS. 1, 2, 12, and 13, the connecting member 1 includes a lateral wall part 12. At least a part of the sealing member 3 is tightly pressed between the lateral wall part 12 and the valve core 2. The sealing member 3 includes a circumferential wall part 33. The elastic part 31 is arranged on an outer side of the circumferential wall part 33. Of course, the sealing member 3 in this embodiment is also applicable for sealing of planar surfaces, spherical surfaces and other curved surfaces.

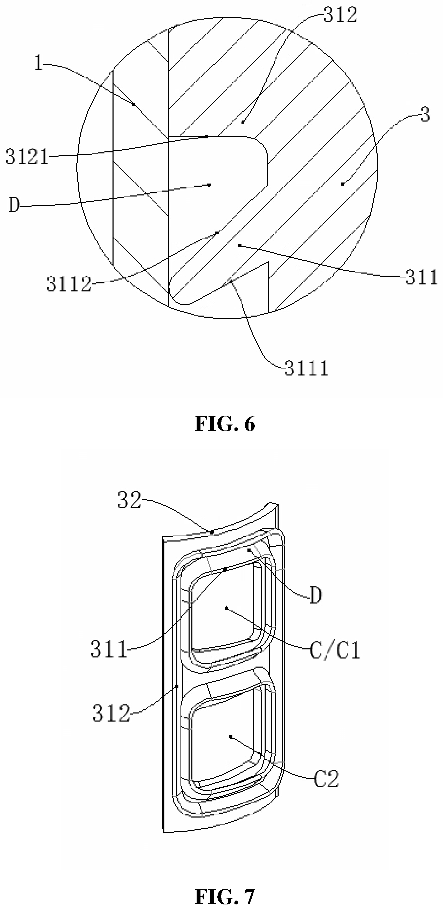

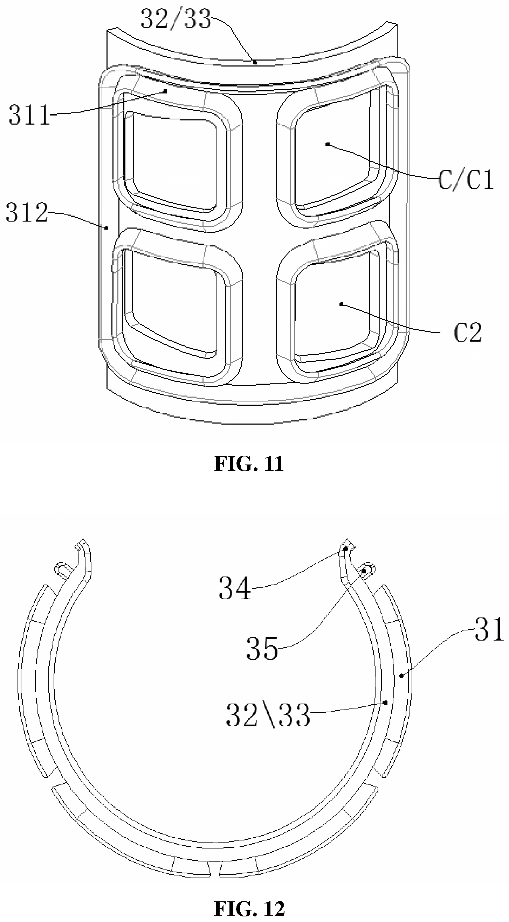

Further, this embodiment is applicable for sealing of a multi-way column valve. The number of the channel C of the sealing member 3 is plural. The elastic part 31 includes first elastic portions 311 and a second elastic portion 312. Each first elastic portion 311 is arranged along the periphery of the respective channel C, and each second elastic portion 312 is arranged along the periphery of one or more of the channels C. Walls of each channel C include the respective first elastic portion 311. One or more of the first elastic portions 311 are arranged within a space enclosed by each second elastic portion 312. Referring to FIG. 8, in this embodiment, one first elastic portion 311 and one second elastic portion 312 are provided on the circumferential wall part 33 at each channel C. Referring to FIGS. 7 and 11, in this embodiment, due to the miniaturized design of the valve, the space between the multiple channels C is limited. Therefore, one first elastic portion 311 is arranged on the circumferential wall part 33 at each of the multiple channels C. One second elastic portion 312 is arranged at a side of multiple of the first elastic portions 311 away from a center of the channels C corresponding to the multiple of the first elastic portions 311. The multiple of the first elastic portions 311 are arranged within a space enclosed by the one second elastic portion 312. This configuration not only allows miniaturization of the valve, but also reduces manufacturing costs.

Referring to FIG. 7, in order to reduce an overall height dimension of the valve while allowing a rotational tolerance for the valve core 2, i.e., ensuring that a vertical partition 23 of the valve core 2 keeps abutting against the circumferential wall part 33 between the channels C of the sealing member 3 within a predetermined rotational angle, the sealing member 3 in this embodiment includes multiple sets of channels C. Each set of channels C includes a first channel C1 and a second channel C2. The first channel C1 is located at an upper side of the second channel C2. Orthogonal projections of the multiple sets of channels C in the axial direction of the valve core 2 are arranged along a circumferential direction of the valve core 2 and are spaced apart from each other. Specifically, four sets of channels C are provided. Each set of channels C includes two channels, namely the first channel C1 and the second channel C2. An orthogonal projection of the first channel C1 coincides with that of the second channel C2. Walls of the first channel C1 include one of the first elastic portions 311, and walls of the second channel C2 include another one of the first elastic portions 311. The two first elastic portions 311 are located within a space enclosed by the same second elastic portion 312.

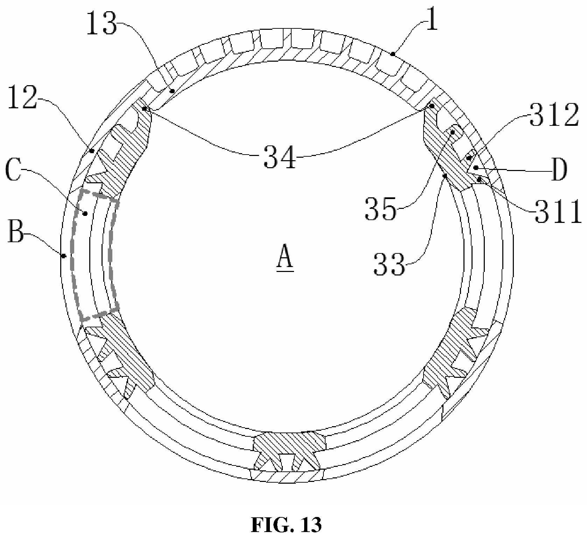

Referring to FIGS. 12 and 13, since the outer side of the circumferential wall part 33 of the sealing member 3 is provided with the elastic part 31 protruding toward the connecting member 1, a part of the circumferential wall part 33 without the elastic part 31 may undergo significant deformation under pressing effects caused by the valve core 2 and the connecting member 1. Such part is primarily located between a position-limiting part 34 of the sealing member 3 and the elastic part 31. Typically, a depression is formed as a result of the vertical partition 23 of the valve core 2 pressing against the above-mentioned part of the sealing member 3. In this embodiment, the sealing member 3 is provided with a position-limiting part 34 at each of two ends of the circumferential wall part 33 in a circumferential direction of the valve core 2. The lateral wall part 12 of the connecting member 1 is provided with a position-limiting rib 13. The position-limiting parts 34 abut against the position-limiting rib 13. The sealing member 3 further includes support parts 35 on the outer side of the circumferential wall part 33. Each support part 35 is arranged between the respective position-limiting part 34 and the elastic part 31. The support part 35 is configured to abut against the lateral wall part 12 of the connecting member 1. It should be noted that the sealing member 3 in this embodiment is not in a complete cylindrical shape, but the configurations described in this embodiment are also applicable to a cylindrical sealing member for a valve body.

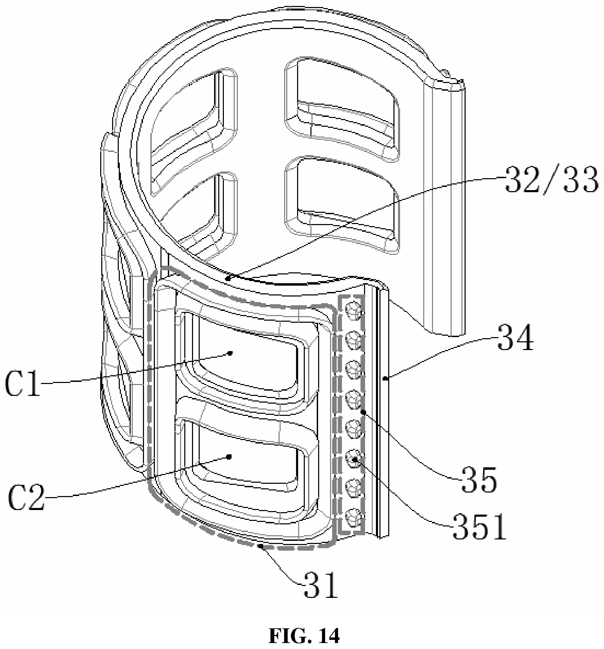

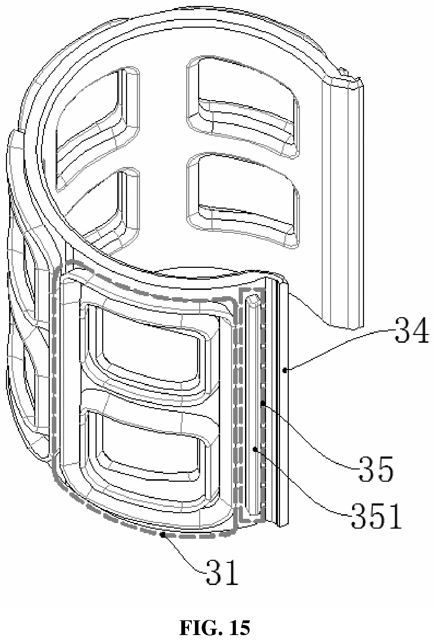

Further, referring to FIG. 15, the support part 35 may be a continuous support body, or protrusions that are spaced apart from each other. Referring to FIG. 14, in this embodiment, the support part 35 includes multiple support bodies 351 protruding toward the lateral wall part 12 relative to the circumferential wall part 33. The multiple supporting bodies 351 are arranged along the axial direction of the valve core 2 and are spaced apart from each other. By configuring the supporting bodies 351 as protrusions spaced apart from each other, on the one hand, it is ensured that when a high-pressure fluid is circulated, the high-pressure fluid can flow in an area on the outer side of the circumferential wall part 33, applying pressure to the fourth surface 3122 of the second elastic portion 312; and on the other hand, the support bodies 351 have greater deformation, which ensures that the elastic part 31 is in close contact with the connecting member 1.

In some embodiments, the sealing groove D of the elastic part 31 is preferably located at a position in an extension direction of an upper partition 21, a lower partition 22, or a middle partition 24 of the valve core, so that the elastic part 31 is more effectively compressed and the gas in the sealing groove D is discharged more completely, and thus the second surface 3112 and the third surface 3121 of the elastic part 31 can be in closer contact with the lateral wall part 12 of the connecting member 1, thereby improving the sealing performance of the valve.

It should be noted that the above embodiments are provided merely for illustrating the present application, rather than limiting the technical solutions described in the present application. For example, the definition of directions such as "front", "rear", "left", "right", "upper" and, "lower" are merely for illustrating purpose rather than limiting the present application. Although the present application has been described in detail in the specification with reference to the above embodiments, it should be understood by those skilled in the art that, modifications, combinations, or equivalent substitutions can be made by those skilled in the art to the present application, and all technical solutions and improvements thereof without deviating from the concept and scope of the present application shall fall within the scope of the claims of the present application.

## Claims

1. A valve device, comprising:
a connecting member (1);
a valve core (2); and
a sealing member (3), wherein
the connecting member (1) is provided with an accommodation chamber (A) and a communication port (B), the sealing member (3) is provided with a channel (C) correspondingly communicated with the communication port (B), and at least a part of the valve core (2) is located in the accommodation chamber (A); and
the sealing member (3) comprises an elastic part (31) that is arranged along a periphery of the channel (C), the elastic part (31) is compressed by the connecting member (1) and the valve core (2), the sealing member (3) is provided with a sealing groove (D) that is arranged along the periphery of the channel (C), and the connecting member (1) is in close contact with the elastic part (31) to block the sealing groove (D).

2. A valve device, comprising:
a connecting member (1);
a valve core (2); and
a sealing member (3), wherein
the connecting member (1) is provided with an accommodation chamber (A) and a communication port (B), the sealing member (3) is provided with a channel (C) correspondingly communicated with the communication port (B), and at least a part of the valve core (2) is located in the accommodation chamber (A); and
the sealing member (3) comprises an elastic part (31) that is arranged along a periphery of the channel (C), the elastic part (31) is compressed by the connecting member (1) and the valve core (2), the sealing member (3) is provided with a sealing groove (D) that is arranged along the periphery of the channel (C), at least a part of walls of the sealing groove (D) is located at the elastic part (31), and the connecting member (1) is in close contact with and presses against the walls of the sealing groove (D).

3. The valve device according to claim 1 or 2, comprising a cavity (E), wherein the cavity (E) is located between the connecting member (1) and the sealing member (3) in a radial direction of the accommodation chamber (A), the cavity (E) is located closer to an end part of the sealing member (3) than the sealing groove (D) in an axial direction of the valve core (2), walls of the cavity (E) comprise an outer peripheral wall of the elastic part (31), and the cavity (E) is communicated with the accommodation chamber (A).

4. The valve device according to any one of claims 1 to 3, wherein the elastic part (31) comprises a first elastic portion (311) and a second elastic portion (312), each of the first elastic portion (311) and the second elastic portion (312) is arranged along the periphery of the channel (C), the second elastic portion (312) is located farther from a center of the channel (C) than the first elastic portion (311), and walls of the sealing groove (D) comprise the first elastic portion (311) and the second elastic portion (312).

5. The valve device according to claim 4, wherein the sealing member (3) comprises a base (32), the elastic part (31) and the base (32) are integrally formed, the elastic part (31) protrudes toward the connecting member (1) relative to one lateral wall of the base (32), and the other lateral wall of the base (32) is in sliding fit with the valve core (2).

6. The valve device according to claim 5, wherein
the first elastic portion (311) comprises a first abutment portion (311a) and a first connecting portion (311b), the connecting member (1) presses against the first abutment portion (311a), the first connecting portion (311b) is connected to the base (32) and the first abutment portion (311a), the first abutment portion (311a) is located farther from the base (32) than the first connecting portion (311b), and the first abutment portion (311a) is located closer to the center of the channel (C) than the first connecting portion (311b); and/or
the second elastic portion (312) comprises a second abutment portion (312a) and a second connecting portion (312b), the connecting member (1) presses against the second abutment portion (312a), the second connecting portion (312b) is connected to the base (32) and the second abutment portion (312a), the second abutment portion (312a) is located farther from the base (32) than the second connecting portion (312b), and the second abutment portion (312a) is located farther from the center of the channel (C) than the second connecting portion (312b).

7. The valve device according to claim 6, wherein an acute angle between the first elastic portion (311) and the base (32) is referred to as a first included angle (a), the first included angle (a) is greater than 30 degrees and less than 80 degrees, an acute angle between the second elastic portion (312) and the base (32) is referred to as a second included angle (b), and the second included angle (b) is greater than 30 degrees and less than 80 degrees.

8. The valve device according to any one of claims 1 to 7, wherein the connecting member (1) comprises a lateral wall part (12), at least a part of the sealing member (3) is tightly pressed between the lateral wall part (12) and the valve core (2), the sealing member (3) comprises a circumferential wall part (33), and the elastic part (31) is arranged on an outer side of the circumferential wall part (33).

9. The valve device according to claim 8, wherein the number of the channel (C) of the sealing member (3) is plural, the elastic part (31) comprises first elastic portions (311) and a second elastic portion (312), each first elastic portion (311) is arranged along the periphery of the respective channel (C), and each second elastic portion (312) is arranged along a periphery of one or more of the channels (C), walls of each channel (C) comprise the respective first elastic portion (311), and one or more of the first elastic portions (311) are arranged within a space enclosed by each second elastic portion (312).

10. The valve device according to claim 9, wherein
the sealing member (3) comprises a plurality of sets of channels (C), each set of channels (C) comprises a first channel (C1) and a second channel (C2), and orthogonal projections of the plurality of sets of channels (C) in an axial direction of the valve core (2) are arranged along a circumferential direction of the valve core (2) and are spaced apart from each other, wherein
an orthogonal projection of the first channel (C1) in the axial direction of the valve core (2) coincides with an orthogonal projection of the second channel (C2) in the axial direction of the valve core (2), walls of the first channel (C1) comprises one of the first elastic portions (311), walls of the second channel (C2) comprises another of the first elastic portions (311), and the two first elastic portions (311) are located in a space enclosed by the same one of the second elastic portion (312).

11. The valve device according to any one of claims 7 to 10, wherein
the sealing member (3) is provided with position-limiting parts (34) that are respectively located at two ends of a circumferential wall part (33) of the sealing member (3) in a circumferential direction of the valve core (2), and a lateral wall part (12) of the connecting member (1) is provided with a position-limiting rib (13), the position-limiting parts (34) abut against the position-limiting rib (13); and
a support part (35) is disposed on an outer side of the circumferential wall part (33) and is arranged between the elastic part (31) and each position-limiting part (34), and the support part (35) abuts against the lateral wall part (12) of the connecting member (1).

12. The valve device according to claim 9, wherein
the sealing member (3) is provided with position-limiting parts (34) that are respectively located at two ends of the circumferential wall part (33) of the sealing member (3) in a circumferential direction of the valve core (2), and the sealing member (3) further comprises support parts (35) that abut against the lateral wall part (12) of the connecting member (1); and
each support part (35) is arranged between the elastic part (31) and the respective position-limiting part (34), the support part (35) comprises a plurality of support bodies (351) protruding toward the lateral wall part (12) relative to the circumferential wall part (33), and the plurality of support bodies (351) are arranged along an axial direction of the valve core (2) and are spaced apart from each other.
